**Europäisches Patentamt**

**European Patent Office**

**Office européen des brevets**

(19)

(11) Veröffentlichungsnummer : **0 513 427 B1**

# (12) EUROPÄISCHE PATENTSCHRIFT

(45) Veröffentlichungstag der Patentschrift :
**06.07.94 Patentblatt 94/27**

(51) Int. Cl.$^5$ : **G01D 5/36**, G01D 5/38

(21) Anmeldenummer : **91108119.8**

(22) Anmeldetag : **18.05.91**

(54) **Interferentielle Positionsmessvorrichtung.**

(43) Veröffentlichungstag der Anmeldung :
**19.11.92 Patentblatt 92/47**

(45) Bekanntmachung des Hinweises auf die
Patenterteilung :
**06.07.94 Patentblatt 94/27**

(84) Benannte Vertragsstaaten :
**AT CH DE FR GB IT LI**

(56) Entgegenhaltungen :
**EP-A- 0 096 476**
**EP-A- 0 333 929**
**DE-A- 2 405 341**

(56) Entgegenhaltungen :
**US-A- 3 162 711**
**US-A- 3 166 624**
**Hiroshi Nishihara et al., OPTICAL INTEGRA-**
**TED CIRCUITS, Mc Graw-Hill Book Company,**
**New York 1987, S. 260, 261**

(73) Patentinhaber : **Dr. Johannes Heidenhain**
**GmbH**
**Dr.-Johannes-Heidenhain-Strasse 5**
**Postfach 1260**
**D-83292 Traunreut (DE)**

(72) Erfinder : **Holzapfel, Wolfgang, Dr.**
**Blumenstrasse 24**
**W-8201 Obing (DE)**

EP 0 513 427 B1

**Beschreibung**

Die Erfindung bezieht sich auf eine interferentiell arbeitende Vorrichtung nach dem Oberbegriff des Anspruches 1, ausgehend von EP-A- 0163362.

Referenzmarken sind bei photoelektrischen inkrementalen Längen- und Winkelmeßeinrichtungen üblich, um einen definierten Nullpunkt festlegen und reproduzieren zu können.

In der DE 34 16 864 ist der Aufbau einer Referenzmarke zur Erzeugung eines Referenzimpulses beschrieben. Es werden dabei Phasengitter als Teilungsmarkierungen verwendet, die die Strahlung einer Lichtquelle beugen und auf Detektoren lenken. Die Auswertung von Gegentakt- bzw. Pseudogegentaktsignalen liefert einen Referenzimpuls, der von der Beleuchtungsintensität (und in gewissen Grenzen auch von Abstandsänderungen) relativ unabhängig ist. Die Impulsbreiten dieses Referenzimpulses werden im wesentlichen durch die Breiten der Teilungsmarkierungen auf dem Teilungsträger und den Breiten der Spalte in der Abtastplatte bestimmt. Mit dieser auf Schattenwurf basierenden Vorrichtung lassen sich aufgrund von Beugungseffekten keine Referenzimpulse mit sehr kleinen Impulsbreiten erzeugen, wie sie für hochauflösende, inkrementale Meßsysteme erforderlich wären. Außerdem müssen die Abtastplatte und der Teilungsträger im engen Abstand gehalten werden.

Aus der DE 34 17 176 ist ein Referenzimpulsgeber bekannt, der die oben angeführten Nachteile nicht besitzt. Dieser besteht aus mehreren Gittern mit periodischen Teilungen unterschiedlicher Gitterkonstante, aus denen entsprechend dem Dreigittergeberprinzip (Dissertation J. Willhelm, "Dreigitterschrittgeber - photoelektrische Aufnehmer zur Messung von Lageänderungen", TU Hannover 1978) Signale unterschiedlicher Periode abgeleitet werden. Entsprechend einer Fourier-Reihe werden diese Signale zusammengefaßt. Dadurch lassen sich Referenzimpulse sehr kleiner Breite erzeugen, die zudem kaum vom Abstand zwischen der Abtastplatte und dem Teilungsträger abhängen. Allerdings liefert diese Vorrichtung nicht nur einen einzelnen Referenzimpuls, sondern eine periodische Folge von Impulsen. Es müssen daher durch zusätzliche Maßnahmen diese Impulse unterscheidbar gemacht werden. Da der Impulsabstand nicht beliebig vergrößert werden kann, ist zur Selektion eines Impulses ein erheblicher Aufwand nötig.

Der Erfindung liegt daher die Aufgabe zugrunde, eine Vorrichtung der eingangs genannten Art zu schaffen, die Signale sehr kleiner Breite liefert, die in weiten Grenzen unabhängig sind von der Beleuchtungsintensität und von dem Abstand zwischen dem Abtastgitter und dem Teilungsträger. Zudem soll durch verschieden ausgebildete Referenzmarken eine Unterscheidung der Referenzmarken möglich sein.

Diese Aufgabe wird mit einer Vorrichtung gelöst, die die kennzeichnenden Merkmale des Anspruches 1 aufweist.

Die Vorteile der erfindungsgemäßen Vorrichtung liegen darin, daß trotz der sehr kleinen Breite des Referenzimpulses die Abtastung der Referenzmarken auch in einem großen Abtastabstand möglich ist und daß dementsprechend die Abtastung der Referenzmarken gegenüber Abtastabstandsänderungen unempfindlich ist. Ferner ist es bei dieser Vorrichtung möglich, durch verschiedene Ausgestaltungen der Referenzmarken unterschiedliche Signalformen zu erzeugen. So können z.B. mehrere Referenzmarken unterscheidbar gemacht werden. Die Anwendung der erfindungsgemäßen Vorrichtung ist aber nicht beschränkt auf Referenzmarken. So können auch Nullsignale für Nullsensoren erzeugt werden, deren Signalverlauf in weiten Grenzen durch geeignete Gitterparameter eingestellt werden kann.

Vorteilhafte Ausgestaltungen entnimmt man den abhängigen Ansprüchen.

Mit Hilfe von Ausführungsbeispielen soll anhand der Zeichnungen die Erfindung näher erläutert werden. Die Darstellungen sind zum besseren Verständnis stark vereinfacht.

Es zeigt

Figur 1    eine Durchlichtanordnung mit drei gleichartig gechirpten Gittern in Nullstellung (X=0),
Figur 2    eine Meßeinrichtung nach dem Auflichtverfahren arbeitend,
Figur 3    eine Draufsicht auf die Meßeinrichtung nach Figur 2 entlang der Schnittlinie I/I,
Figur 4    eine Teilansicht auf eine Abtastplatte entlang der Linie II/II nach Figur 2,
Figur 5    eine Teilansicht eines Reflexphasengitters entlang der Linie III/III nach Figur 2,
Figur 6    eine Ansicht der Lichtquelle und der Photoelemente in der Brennebene des Kondensors entlang der Linie IV/IV in Figur 2,
Figur 7    eine vorteilhafte Anordnung von Gittern auf der Abtastplatte A und dem Teilungsträger B für ein inkrementales Längenmeßsystem mit Referenzimpuls,
Figur 8    eine weitere Variante einer Anordnung von Gittern für ein inkrementales Längenmeßsystem mit Referenzimpuls,
Figur 9    ein typischer Signalverlauf eines Referenzimpulses; erzeugt mit einer Abtastplatte und einem Teilungsträger nach Figur 8 und
Figur 10    veranschaulicht den in Figur 1 stark schematisierten Aufbau einer Positionsmeßeinrichtung.

EP 0 513 427 B1

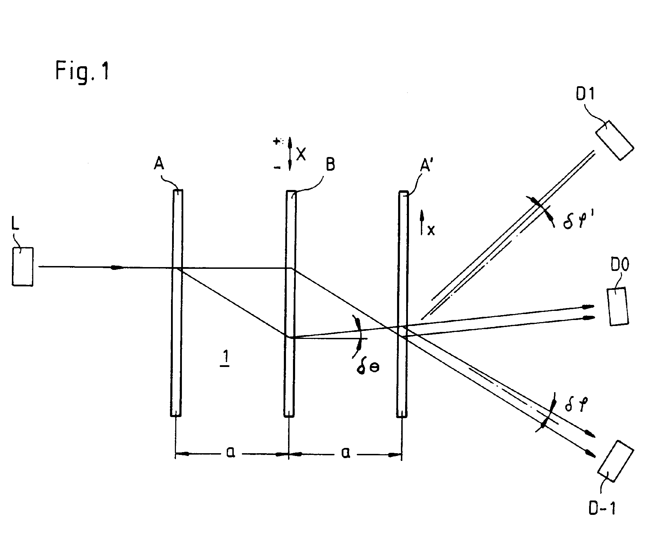

In Figur 1 ist schematisch eine im Auflichtverfahren arbeitende Meßeinrichtung 1 dargestellt. Drei Beugungsgitter A, B, A' besitzen keine periodische Teilung. Ihre Gitterkonstante d=d(x) ändert sich vielmehr entlang der Teilungsrichtung x. In der Literatur werden solche Gitter als gechirpte Gitter bezeichnet. Es wird hier zunächst angenommen, daß die gechirpten Gitter A, B und A' eine identische Teilung besitzen. In Figur 1 sind der Einfachheit halber nur wenige Beugungsstrahlen eingezeichnet. Das Lichtbündel einer kollimierten, inkohärenten Lichtquelle LED wird am Gitter A in Teilstrahlenbündel aufgespalten. Diese werden am Gitter B umgelenkt und schließlich am Gitter A' überlagert und zur Interferenz gebracht. Die Detektoren D-1, Do, D1 detektieren die Strahlenbündel in -1., 0. und +1. resultierende Beugungsordnung.

Befindet sich das entlang der Teilungsrichtung verschiebbare Gitter B in der Stellung X=0, bei der sich entsprechende Gitterstege der Gitter A, A' und B gegenüberstehen, so treten durch den Einfluß der ortsabhängigen Gitterkonstante Strahlneigungen $\delta\Theta$, $\delta\varphi$, $\delta\varphi'$ auf, die zu Phasenverschiebungen zwischen den Teilstrahlenbündeln führen, die vom Gitterabstand a abhängen. Diese Phasenverschiebungen müssen klein gehalten werden, da nur dann der mit Hilfe der Detektoren D-1, D0, D1 gewonnene Signalverlauf $S_n(X)$, n=-1, 0, 1 vom Abstand a der Gitter A, B, A' unabhängig ist. Dabei steht der Index "n" für die n-te resultierende Ordnung.

Diese Bedingung läßt sich erfüllen, wenn die Variation $\frac{\delta d(x)}{\delta x}$ der lokalen Gitterkonstante d(x) auf kleine Werte begrenzt bleibt, was sich in der Praxis stets durch eine entsprechend lange Gitterteilung erreichen läßt.

Die Idee der Erfindung geht aus von einem herkömmlichen Dreigittergeber, der periodische Signale mit einer Periode gleich der halben Gitterkonstante liefert. Bei Verwendung gechirpter Gitter können diese gedanklich in viele kleine Teilgitter mit jeweils konstanter aber untereinander verschiedener Gitterkonstanten zerlegt werden. Jedes Teilgitter liefert bei kleinen Verschiebungen X des Gitters B periodische Signale unterschiedlicher Frequenz. Durch die Überlagerung aller Signalfrequenzen entsteht ein nichtperiodischer Signalverlauf $S_n(x)$, ähnlich einer Überlagerung eines kontinuierlichen Frequenzspektrums in einem Fourierintegral.

Verschiedene funktionale Abhängigkeiten der lokalen Teilungsperiode d(x) von der Teilungsrichtung x ergeben unterschiedliche Signalverläufe $S_n(x)$. Auch durch die ortsabhängige Variation anderer Gitterparameter, wie Steghöhe, Stegbreite, Steglänge, Transmission, Absorption, Form der Stege; läßt sich bei Verwendung gechirpter Gitter der Signalverlauf $S_n(x)$ beeinflussen.

Die Signalform $S_n(x)$ wird des weiteren bestimmt von der Phasenlage der einzelnen Frequenzkomponenten, die die einzelnen Teilgitter beitragen. Diese Phasenlagen lassen sich verschieben, indem man die einzelnen Gitterstege in den Teilgittern des Beugungsgitters B gegenüber dem entsprechenden der Beugungsgitter A und A' verschiebt. So läßt sich die Signalform $S_n(x)$ in weiten Grenzen verändern.

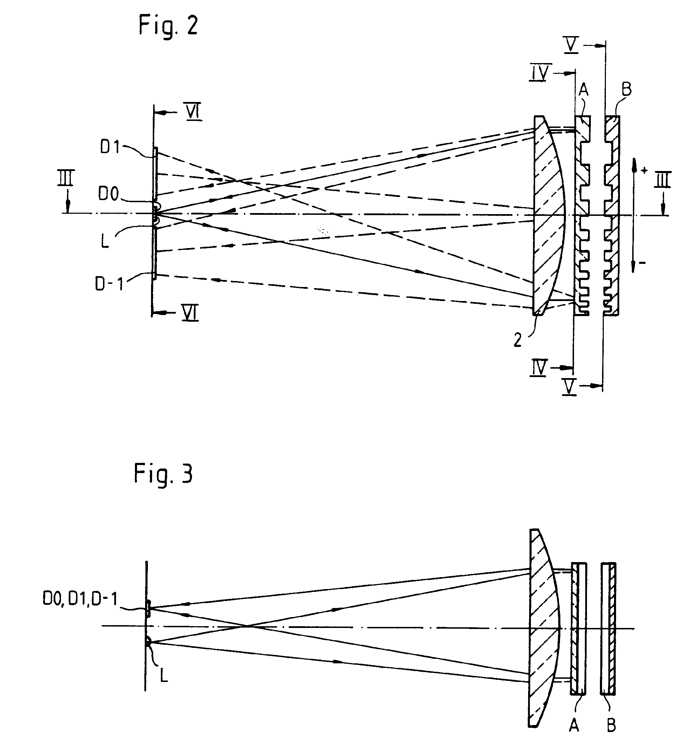

In Figur 2 ist ein Beispiel einer erfindungsgemäßen Vorrichtung nach dem Auflichtprinzip dargestellt. Die Strahlung einer Lichtquelle L (LED) wird von einem Kondensor 2 kollimiert und an den Phasengittern A und B gebeugt und reflektiert. In der Brennebene des Kondensors 2 entstehen Beugungsbilder 0. und höherer Ordnung der Lichtquelle L, die durch die Photoelemente D-1, D0 und D1 detektiert werden. Die Photoelemente D-1 und D1 besitzen eine ausreichende Länge, um die verschiedenen Beugungswinkel der gechirpten Gitter in resultierender -1. bzw. +1. Ordnung empfangen zu können.

In Figur 3 ist die Meßeinrichtung in der Draufsicht entlang der Linie III/III der Figur 2 gezeigt. Die Lichtquelle L ist aus der optischen Achse versetzt angeordnet, damit die Beugungsbilder 0. Ordnung nicht in die Lichtquelle zurückgeworfen werden, sondern versetzt auf den entsprechend angeordneten Photodetektor D0 fallen. Die Lichtquelle kann jedoch in der optischen Achse verbleiben, wenn nur höhere als die 0. Ordnung ausgewertet werden.

Aus EP 0 163 362 A1 ist bekannt, daß durch die Gitterparameter die Phasenverschiebung zwischen den resultierenden Beugungsordnungen eingestellt werden kann. Diese Phasenverschiebung kann gemäß der vorliegenden Erfindung für jede Frequenzkomponente unabhängig eingestellt werden, indem die lokalen Gitterparameter entsprechend gewählt werden.

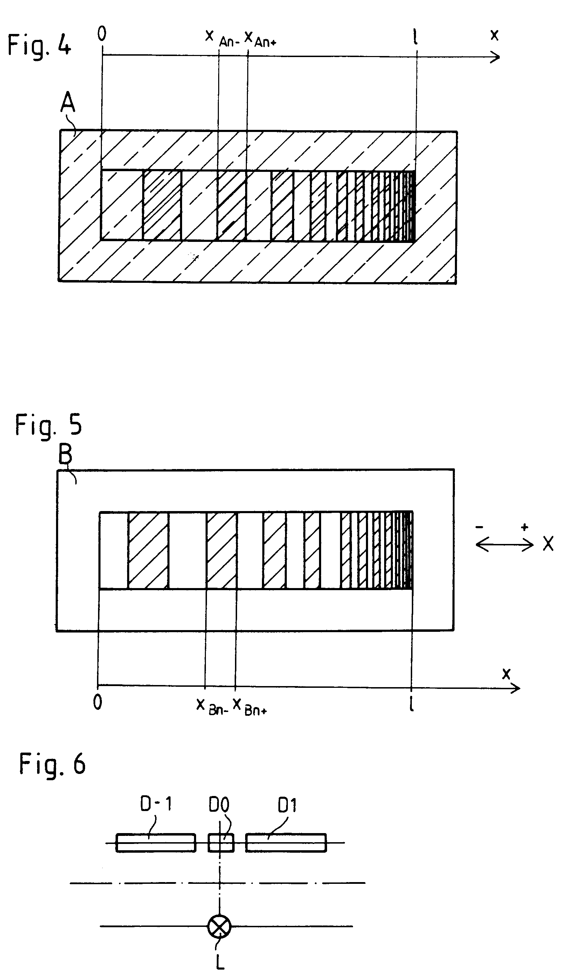

In Figur 4 und 5 sind schematisch die gechirpten Gitter A und B gezeichnet, wie sie den Ansichten IV/IV und V/V in Figur 2 entsprechen. Hier sind die Kanten $x_{An-}$ und $x_{An+}$ des n-ten Gittersteges des Gitters A gegenüber den Kanten $x_{Bn-}$ und $x_{Bn+}$ des n-ten Steges des Gitters B verschoben, um eine Phasenverschiebung des Signals zu erreichen.

Figur 6 zeigt die Anordnung der Photodetektoren D-1, D0, D1 und der Lichtquelle L entsprechend einer Ansicht VI/VI in Figur 2.

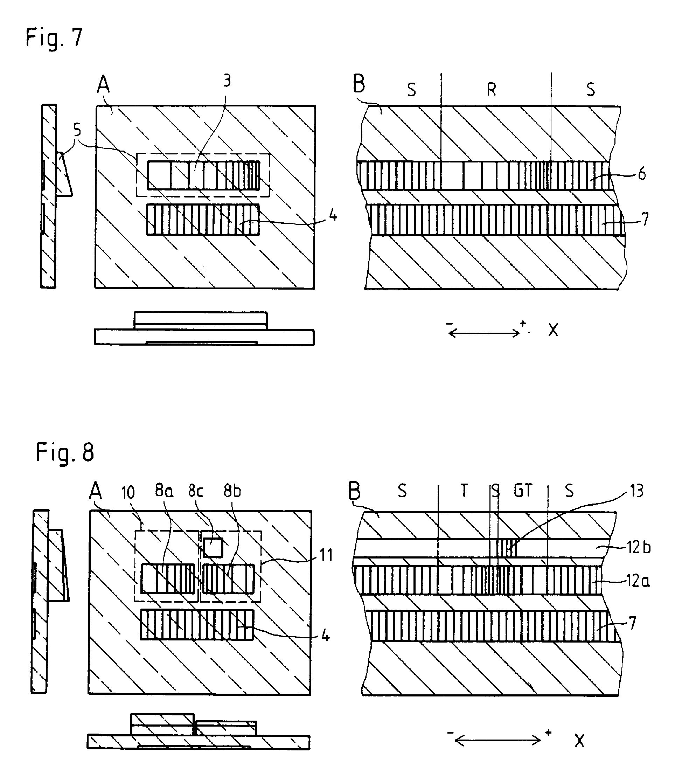

Figur 7 zeigt eine mögliche Anordnung von Gittern auf der Abtastplatte A und dem Teilungsträger B für ein inkrementales Längenmeßsystem mit Referenzimpuls. Das periodische Teilungsfeld 4 der Abtastplatte A dient zusammen mit der periodischen Maßstabteilung 7 des Teilungsträgers B zur Erzeugung der Inkrementalsignale des Längenmeßgebers. Das gechirpte Gitter des Teilungsfeldes 3 erzeugt mit der Teilungsspur 6 des Teilungsträgers B den Referenzimpuls. Diese Teilungsspur 6 ist unterteilt in einen Bereich R mit einem gechirpten Gitter und in daran anschließende Bereiche S, die periodisch geteilt sind. In der Nullposition X=0

3

EP 0 513 427 B1

des Teilungsträgers B, bei der ein Referenzimpuls generiert wird, steht das Teilungsfeld 3 der Abtastplatte A über dem Bereich R der Teilungsspur 6. Die gechirpten Gitter sind so ausgelegt, daß in der resultierenden 0. Beugungsordnung ein Taktsignal und in den ±1. Beugungsordnungen ein Gegentaktsignal erzeugt wird. Verschiebt man nun den Teilungsträger B aus der Nullage heraus, so gewährleistet das periodische Gitter im Bereich S der Teilungsspur 6, daß auf die Photoelemente des Gegentakts mehr Licht fällt, als auf das Photoelement des Takts. Man kann nun in bekannter Weise das Takt- und das Gegentaktsignal in Differenz schalten und den Referenzimpuls bei einem Schwellenpegel in der Nähe des Nullpegels triggern. Auf diese Weise bleibt der Referenzimpuls in einem großen Bereich unabhängig von der Beleuchtungsintensität. Ein Prisma 5 dient schließlich zur Trennung der Beugungsstrahlen des Referenzimpuls- und des inkrementalen Längenmeßgebers.

Figur 8 zeigt ein weiteres Ausführungsbeispiel für einen inkrementalen Längenmeßgeber mit Referenzimpuls. Die Abtastplatte A besitzt neben dem Teilungsfeld 4 für den inkrementalen Längenmeßgeber zwei getrennte Teilungsfelder 8a und 8b mit gechirpten Gittern, sowie ein Fenster 8c ohne Teilung. Ein Prisma 10 lenkt die 0. resultierende Beugungsordnung des Feldes 8a auf ein Photoelement für das Taktsignal. Die 0. resultierende Beugungsordnung der Felder 8b und 8c werden mittels Prisma 11 gemeinsam auf ein Photoelement für das Gegentaktsignal geleitet. ±1. resultierende Beugungsordnung werden in dieser Anordnung eines Referenzimpulsgebers nicht ausgewertet.

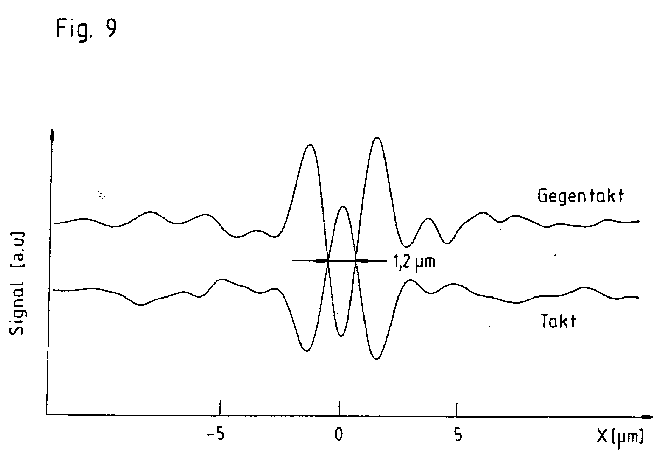

In der Nullstellung X=0 des Teilungsträgers B, bei dem ein Referenzimpuls abgegeben wird, befindet sich das gechirpte Teilungsfeld 8a über dem Bereich T der Spur 12a des Teilungsträgers B und das Feld 8b über dem Bereich GT. Die gechirpten Gitter sind so ausgelegt, daß in Nullstellung X=0 ein maximales Takt- und ein minimales Gegentaktsignal erzeugt wird (siehe Figur 9).

Das minimale Gegentaktsignal in Nullstellung X=0 wird dabei durch eine Verschiebung $\varphi = \frac{\pi}{2}$ der Gitterstege des Teilungsfensters 8b gegenüber den zugehörigen Gitterstegen des Bereiches GT auf der Spur 12a um etwa einer halben lokalen Gitterkonstante erreicht. Zu beachten ist außerdem die umgekehrte Orientierung der gechirpten Gitter des Takts und Gegentakts, so daß die kleinste lokale Gitterkonstante jeweils innen liegt. Wird nun beispielsweise das zum Takt gehörige Teilungsfenster 8a über den Bereich GT der Spur 12a geschoben, so entsteht kein weiterer Signalimpuls.

Durch ein Fenster 8c auf der Abtastplatte und eine zusätzliche Spur 12b auf dem Teilungsträger B wird außerhalb der Nullstellung X±0 das Gegentaktsignal gegenüber dem Taktsignal angehoben und damit die Störsicherheit vergrößert.

Diese Spur 12b trägt dazu ein Phasengitter 13, dessen 0. Beugungsordnung durch die Wahl der Gitterparameter unterdrückt ist, sowie daran anschließend reflektierende Bereiche. Nur in der Stellung X=0 verhindert das Gitter 13, daß durch das Fenster 8c Strahlung auf das Photoelement des Gegentakts fällt.

Um Strahlung durch das Fenster 8c auf das Photoelement des Gegentaktes zu verhindern kann anstelle eines Gitters beispielsweise auch ein lichtabsorbierender Bereich auf der Spur 12b vorgesehen sein.

Es ist bekannt, daß das Dreigitterprinzip auch für Drehgeber anwendbar ist. Es liegt deshalb im Rahmen der Erfindung, auch einen Drehgeber nach der Erfindung auszugestalten, indem entweder gechirpte Radialteilungen verwendet oder gechirpte Teilungen auf Zylinderflächen aufgebracht werden.

Mit Hilfe der hier beschriebenen Vorrichtung lassen sich in Abhängigkeit einer Verschiebung X je nach Ausbildung der gechirpten Gitter, sehr unterschiedliche Signalformen erzeugen. Die Verwendung dieser Vorrichtung ist dabei nicht auf die Erzeugung von Referenzimpulsen beschränkt. So können auch für verschiedene Nullsensoren geeignete Signalverläufe generiert werden.

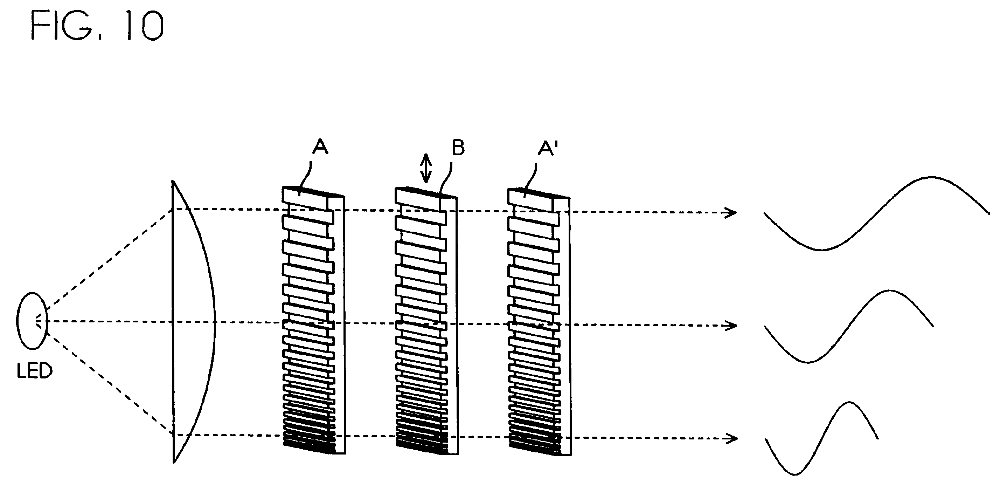

Figur 10 veranschaulicht nochmals den Aufbau einer Positionsmeßeinrichtung, vor allem die besondere Struktur der Beugungsgitter A, B und A'.

Als Beugungselemente müssen nicht unbedingt Beugungsgitter eingesetzt werden. Auch andere beugende Elemente können verwendet werden, wenn ihre beugende Struktur - z. B. Punkte (Kreisscheiben) statt Gitterstriche - sich ortsabhängig und stetig verändert.

**Patentansprüche**

1. Interferentiell arbeitende Vorrichtung zur Erzeugung von elektrischen Signalen bei Lagemeßeinrichtungen mit einer Lichtquelle (L), wenigstens zwei relativ zueinander in im Wesentlichen parallelen Ebenen bewegten Beugungselementen (A, B, A'), deren Beugungsstrukturen (d) gleich oder nur geringfügig unterschiedlich sind, sowie mit Detektoren (D-1, D0, D1) zum Erfassen von gebeugten, räumlich getrennten und miteinander interferierenden Teilstrahlenbündeln, dadurch gekennzeichnet, daß die Teilungsperiode der Beugungsstruktur (d) eine stetig ansteigende oder fallende Funktion d=d(x) des Ortes ist.

4

2. Vorrichtung nach Anspruch 1, dadurch gekennzeichnet, daß die Beugungselements als Beugungsgitter (A, B, A') ausgebildet sind.

3. Vorrichtung nach Anspruch 2, dadurch gekennzeichnet, daß die Gitterkonstanten der Beugungsgitter (A, B, A') unterschiedlich sind und sich abhängig vom Ort stetig verändern.

4. Vorrichtung nach Anspruch 2, dadurch gekennzeichnet, daß die Beugungselements als konzentrische Kreise ausgebildet sind, deren radiale Abstände unterschiedlich sind und sich stetig verändern.

5. Vorrichtung nach Anspruch 2, dadurch gekennzeichnet, daß die Steghöhe der Beugungsgitter (A, B, A') ortsabhängig variiert.

6. Vorrichtung nach Anspruch 2, dadurch gekennzeichnet, daß die Stegbreite der Beugungsgitter (A, B, A') ortsabhängig variiert.

7. Vorrichtung nach Anspruch 2, dadurch gekennzeichnet, daß die Steglänge der Beugungsgitter (A, B, A') ortsabhängig variiert.

8. Vorrichtung nach Anspruch 2, dadurch gekennzeichnet, daß die Transmission der Beugungsgitter (A, B, A') ortsabhängig variiert.

9. Vorrichtung nach Anspruch 2, dadurch gekennzeichnet, daß die Absorption der Beugungsgitter (A, B, A') ortsabhängig variiert.

10. Vorrichtung nach Anspruch 2, dadurch gekennzeichnet, daß die Form der Stege der Beugungsgitter (A, B, A') ortsabhängig variiert.

11. Vorrichtung nach Anspruch 2, dadurch gekennzeichnet, daß die Beugungsgitter (A, B, A') als gechirpte Gitter ausgebildet sind.

12. Vorrichtung nach Anspruch 1, dadurch gekennzeichnet, daß mittels einer zusätzlichen, periodischen Gitterteilung (4, 7) eine inkrementale Längen- oder Winkelmeßeinrichtung (1) gebildet wird.

13. Vorrichtung nach Anspruch 1, dadurch gekennzeichnet, daß die interferentiell arbeitende Vorrichtung als Nullsensor ausgebildet ist.

14. Vorrichtung nach Anspruch 1, dadurch gekennzeichnet, daß die Lichtquelle (L) inkohärent ist.

15. Vorrichtung nach Anspruch 14, dadurch gekennzeichnet, daß die Lichtquelle (L) eine lichtemittierende Diode (LED) ist.

16. Vorrichtung nach Anspruch 1, dadurch gekennzeichnet, daß die beugenden Strukturen sich in einer stetigen Aneinanderreihung von beugenden Einzelelementen zusammensetzen, die in Form von Kreisscheiben ausgebildet sind.

**Claims**

1. Interferentially operating device for generating electrical signals in position measuring devices with a light source (L), two or more diffraction elements (A, B, A') which move relative to each other in essentially parallel planes and of which the diffraction structures (d) are the same or only slightly different, as well as with detectors (D-1, D0, D1) for detecting diffracted, spatially separate and mutually interfering partial beams, characterised in that the period of graduation of the diffraction structure (d) is a constantly increasing or decreasing function d=d(x) of location.

2. Device according to claim 1, characterised in that the diffraction elements are constructed as diffraction grids (A, B, A').

3. Device according to claim 2, characterised in that the grid constants of the diffraction grids (A, B, A') are different and vary constantly as a function of location.

4. Device according to claim 2, characterised in that the diffraction grids are constructed as concentric circles between which the radial distances are different and vary constantly.

5. Device according to claim 2, characterised in that the web height of the diffraction grids (A, B, A′) varies as a function of location.

6. Device according to claim 2, characterised in that the web width of the diffraction grids (A, B, A′) varies as a function of location.

7. Device according to claim 2, characterised in that the web length of the diffraction grids (A, B, A′) varies as a function of location.

8. Device according to claim 2, characterised in that the transmission of the diffraction grids (A, B, A′) varies as a function of location.

9. Device according to claim 2, characterised in that the absorption of the diffraction grids (A, B, A′) varies as a function of location.

10. Device according to claim 2, characterised in that the shape of the webs of the diffraction grids (A, B, A′) varies as a function of location.

11. Device according to claim 2, characterised in that the diffraction grids (A, B, A′) are constructed as chirped grids.

12. Device according to claim 1, characterised in that an incremental length or angle measuring device (1) is formed by means of an additional, periodic grid scale (4, 7).

13. Device according to claim 1, characterised in that the interferentially operating device is constructed as a zero sensor.

14. Device according to claim 1, characterised in that the light source (L) is incoherent.

15. Device according to claim 14, characterised in that the light source (L) is a light-emitting diode (LED).

16. Device according to claim 1, characterised in that the diffractive structures are composed of a constant alignment of single diffractive elements which are in the form of discs.


**Revendications**

1. Dispositif interférentiel pour la production de signaux électriques sur des dispositifs de mesure de position, comprenant une source de lumière (L), au moins deux éléments de diffraction (A, B, A′) mobiles l'un par rapport à l'autre dans des plans essentiellement parallèles, éléments dont les structures de diffraction (d) sont identiques ou ne sont que faiblement différentes, ainsi que des détecteurs (D-1, D0, D1) pour détecter des faisceaux de rayons partiels diffractés, séparés dans l'espace et interférant les uns avec les autres, caractérisé par le fait que la période de division de la structure de diffraction (d) est une fonction d=d(x) du lieu, croissant ou décroissant de façon continue.

2. Dispositif suivant revendication 1, caractérisé par le fait que les éléments de diffraction sont réalisés sous la forme de réseaux de diffraction (A, B, A′).

3. Dispositif suivant revendication 2, caractérisé par le fait que les constantes des réseaux de diffraction (A, B, A′) sont différentes et varient de façon continue en fonction du lieu.

4. Dispositif suivant revendication 2, caractérisé par le fait que les réseaux de diffraction sont réalisés sous forme de cercles concentriques dont les distances radiales sont différentes et varient de façon continue.

5. Dispositif suivant revendication 2, caractérisé par le fait que la hauteur des barrettes ou nervures des réseaux de diffraction (A, B, A′) varie en fonction du lieu.

6.  Dispositif suivant revendication 2, caractérisé par le fait que la largeur des barrettes ou nervures des réseaux de diffraction (A, B, A') varie en fonction du lieu.

7.  Dispositif suivant revendication 2, caractérisé par le fait que la longueur des barrettes ou nervures des réseaux de diffraction (A, B, A') varie en fonction du lieu.

8.  Dispositif suivant revendication 2, caractérisé par le fait que la transmission des réseaux de diffraction (A, B, A') varie en fonction du lieu.

9.  Dispositif suivant revendication 2, caractérisé par le fait que l'absorption des réseaux de diffraction (A, B, A') varie en fonction du lieu.

10. Dispositif suivant revendication 2, caractérisé par le fait que la forme des barrettes ou nervures des réseaux de diffraction (A, B, A') varie en fonction du lieu.

11. Dispositif suivant revendication 2, caractérisé par le fait que les réseaux de diffraction (A, B, A') sont réalisés sous forme de réseaux chirpés.

12. Dispositif suivant revendication 1, caractérisé par le fait qu'un dispositif (1) incrémental de mesure de longueur ou d'angle est formé à l'aide d'une division de réseau (4,7) périodique, supplémentaire.

13. Dispositif suivant revendication 1, caractérisé par le fait que le dispositif interférentiel est réalisé sous forme de détecteur de zéro.

14. Dispositif suivant revendication 1, caractérisé par le fait que la source de lumière (L) est incohérente.

15. Dispositif suivant revendication 14, caractérisé par le fait que la source de lumière (L) est une diode émettrice de lumière (LED).

16. Dispositif suivant revendication 1, caractérisé par le fait que les structures de diffraction se composent d'une succession continue d'éléments de diffraction individuels réalisés sous la forme de disques circulaires.

Fig. 1

Fig. 2

Fig. 3

Fig. 4

$x_{An-}$ $x_{An+}$

A

Fig. 5

B

$-$ $+$
$\longleftrightarrow$ X

$x_{Bn-}$ $x_{Bn+}$

Fig. 6

D-1    D0    D1

L

Fig. 7

Fig. 8

Fig. 9

FIG. 10

EP 0 513 427 B1